(19) Europäisches Patentamt
European Patent Office
Office européen des brevets

(11) **EP 2 883 728 B1**

(12) **EUROPÄISCHE PATENTSCHRIFT**

(45) Veröffentlichungstag und Bekanntmachung des Hinweises auf die Patenterteilung:
**09.08.2017 Patentblatt 2017/32**

(51) Int Cl.:
*B61D 19/00* (2006.01)   *B61D 19/02* (2006.01)
*B60J 10/00* (2016.01)   *B60J 10/80* (2016.01)

(21) Anmeldenummer: **14197466.7**

(22) Anmeldetag: **11.12.2014**

(54) **Schienenfahrzeug und Türmodul für ein Schienenfahrzeug mit bunter Türdichtung**

Rail vehicle and door module for a rail vehicle with coloured door seal

Véhicule sur rail et module de porte pour un véhicule sur rail doté de joint de porte coloré

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2013 AT 508342013**

(43) Veröffentlichungstag der Anmeldung:
**17.06.2015 Patentblatt 2015/25**

(73) Patentinhaber: **Knorr-Bremse Gesellschaft mit beschränkter Haftung**
**2340 Mödling (AT)**

(72) Erfinder: **Kaltenmesser, Christian**
**4600 Thalheim bei Wels (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
**EP-A2- 1 132 242   GB-A- 1 014 924**
**US-A- 6 138 338   US-A1- 2005 048 263**

## Beschreibung

Die Erfindung betrifft ein Türmodul für ein Schienenfahrzeug, umfassend einen Türflügel und eine Türdichtung, wobei die Türdichtung am Rand des Türflügels angeordnet ist und im geschlossenen Zustand des Türflügels von der Außenseite wenigstens teilweise sichtbar ist. Weiterhin betrifft die Erfindung ein Schienenfahrzeug mit einem solchen Türmodul.

Ein Türmodul respektive ein Schienenfahrzeug der genannten Art sind grundsätzlich bekannt. Dabei dient die Türdichtung zur Abdichtung des Außenraums gegenüber dem Innenraum, was insbesondere bei hohen Fahrgeschwindigkeiten für den Fahrkomfort wichtig ist. Häufig werden Dichtungen auch um die Kanten eines Türflügels gezogen, um einerseits die Dichtung dauerhaft am Türflügel zu verankern, andererseits aber auch um einen Kantenschutz für den Türflügel herzustellen.

Generell ist es eine Tendenz, sowohl Kraftfahrzeuge als auch Schienenfahrzeuge mit einer homogenen Oberfläche auszustatten, die nur wenig strukturelle Merkmale aufweist. Diese Fahrzeuge sind außen mehr oder minder glatt und wirken wie "aus einem Guss". Auch farblich werden die genannten Fahrzeuge häufig mit einer einheitlichen Lackierung ausgestattet, gegebenenfalls auch mit einem Streifenmuster. Dokument GB 1014924 wird als nächster Stand der Technik angesehen. Während dies in der Kraftfahrzeugtechnik keine größeren Schwierigkeiten aufwirft, tritt bei einem Schienenfahrzeug aufgrund dessen Länge nun das Problem auf, dass die Türen des Schienenfahrzeugs von den Fahrgästen mitunter nur schwer ausgenommen werden können, insbesondere bei schlechten Sichtverhältnissen oder bei Nacht. Auch eine Sehschwäche eines Fahrgasts kann das Auffinden einer Tür erschweren.

Teilweise werden die Türen des Schienenfahrzeugs daher mit einer besonderen Farbgebung gekennzeichnet, was die Lackierung desselben sehr aufwändig macht. Zum Teil werden auch Klebefolien eingesetzt, um die Türen zu kennzeichnen. Diese sind jedoch nicht sehr widerstandsfähig und halten den rauen Betriebsbedingungen nicht allzu lange stand. Insbesondere in einer Waschstraße können sich die Folien leicht ablösen oder beschädigt werden, beispielsweise wenn das Schienenfahrzeug mit abrasivem Staub bedeckt ist, welcher abgebürstet wird.

Eine Aufgabe der Erfindung ist es daher, ein verbessertes Türmodul respektive ein verbessertes Schienenfahrzeug anzugeben. Insbesondere soll eine Tür eines Schienenfahrzeugs gut als solche erkannt werden und die Kennzeichnung auf einfache Weise erfolgen können und auch besonders haltbar sein.

Die Aufgabe der Erfindung wird durch ein Türmodul der eingangs genannten Art gelöst, bei dem die Türdichtung zumindest im genannten Sichtbereich weiß oder bunt

- mit einer Farbsättigung von ≥ 0% bis < 20% und einer Helligkeit von ≥ 80%,
- mit einer Farbsättigung von ≥ 20% bis < 40% und einer Helligkeit von ≥ 60% oder
- mit einer Farbsättigung von ≥ 40% und einer Helligkeit von ≥ 40% gefärbt ist, wobei die Werte insbesondere auf ein HSB-Farbmodell bezogen sind.

Weitere vorteilhafte Werte für die Farbsättigung und die Helligkeit bunter Dichtungsfarben sind jeweils ≥ 50% und ≥ 80%.

Weiterhin wird die Aufgabe der Erfindung durch ein Schienenfahrzeug mit einem solchen Türmodul gelöst. Dadurch resultiert ein Schienenfahrzeug, umfassend ein Türmodul mit einem Türflügel und einer Türdichtung, bei dem die Türdichtung an der Außenseite des Türflügels angeordnet ist und im geschlossenen Zustand des Türflügels wenigstens teilweise sichtbar ist, wobei die Türdichtung zumindest im genannten Sichtbereich weiß oder bunt

- mit einer Farbsättigung von ≥ 0% bis < 20% und einer Helligkeit von ≥ 80%,
- mit einer Farbsättigung von ≥ 20% bis < 40% und einer Helligkeit von ≥ 60% oder
- mit einer Farbsättigung von ≥ 40% und einer Helligkeit von ≥ 40% gefärbt ist, wobei die Werte insbesondere auf ein HSB-Farbmodell bezogen sind.

Auf diese Weise wird die Türdichtung, welche sich ohnehin im Randbereich eines Türflügels befindet, dazu genützt, die Türe zu kennzeichnen. Dies geschieht mit einer bunt oder im Wesentlichen weiß gefärbten Türdichtung. Während Türdichtungen nach dem Stand der Technik möglichst unauffällig gestaltet und häufig nach Möglichkeit hinter Falzen "versteckt" werden, wird die Türdichtung nun gezielt auffällig gestaltet. Weitere Maßnahmen zur Kennzeichnung der Tür können somit entfallen. Da die Türdichtung sowieso eingebaut werden muss, ist für die Kennzeichnung der Tür eigentlich kein Zusatzaufwand mehr nötig. Die vorgeschlagene Türdichtung erfüllt damit also einen Mehrfachnutzen.

"Bunte Farben" sind generell Farben mit Buntwirkung, also jeglicher vom neutralen Grau abweichenden Farbigkeit. "Unbunte Farben" sind dagegen Weiß, Schwarz und deren Mischungen in verschiedenen Grau ohne jeglichen Farbstich.

In einem HSB-Farbraum wird jede Farbe durch ihren Farbwert H ("hue"), ihre Sättigung "S" (saturation) und durch ihre Helligkeit "B" (brightness) definiert. Denkbar ist natürlich auch die Wahl eines anderen Farbmodells, beispielsweise des YCC-Farbmodells, bei dem eine Farbe durch Angabe der Rot-, Grün und Blau-Anteile, sowie der Helligkeit und der Chrominanz definiert ist.

Ein Türmodul kann beispielsweise als Schiebetürmodul oder Schwenkschiebetürmodul ausgestaltet sein. Bei einem Schiebetürmodul vollführt der Türflügel lediglich eine Schiebebewegung, wohingegen bei einem Schwenkschiebetürmodul eine Ausstellbewegung und eine Schiebebewegung ausgeführt wird. Die Möglichkeiten hierzu sind in vielfältiger Ausführung an sich bekannt.

Weitere vorteilhafte Ausgestaltungen und Weiterbildungen der Erfindung ergeben sich aus den Unteransprüchen sowie aus der Beschreibung in Zusammenschau mit den Figuren.

Besonders vorteilhaft ist es, wenn die genannte Farbe der Türdichtung mit einer an diese angrenzenden Außenfarbe des Türflügels wenigstens auf einer Teillänge der Türdichtung kontrastiert, insbesondere auf einer Länge der Türdichtung von wenigstens 30% der Gesamtlänge/Umfangslänge der Türdichtung. Dadurch wird die Tür eines Schienenfahrzeugs besonders gut erkannt, da sich die Türdichtung von der Außenfarbe des Türflügels gut abhebt. Je besser der Kontrast ist, umso besser wird die Tür erkannt. Weitere vorteilhafte Werte sind 50% und 80%.

Vorteilhaft ist es weiterhin, wenn die genannte Türflügelfarbe und die genannte Dichtungsfarbe in einem Farbkreis, insbesondere in einem Farbkreis des HSB-Farbmodells oder dem Farbkreis nach Itten, mindestens 45° Abstand aufweisen. Auf diese Weise kann ein ausreichender Kontrast zwischen der Türflügelfarbe und der Dichtungsfarbe erzielt werden. Im HSB-Farbmodell entspricht dies einem Abstand des Farbwerts "H" (hue). Weitere vorteilhafte Werte sind 90° und 135° sowie 180°.

Vorteilhaft ist es darüber hinaus, wenn die genannte Türflügelfarbe und die genannte Dichtungsfarbe hinsichtlich ihrer Sättigung einen Unterschied von wenigstens 50% aufweisen, wobei die Sättigung insbesondere auf ein HSB-Farbmodell bezogen ist. Auf diese Weise kann ebenfalls ein ausreichender Kontrast zwischen der Türflügelfarbe und der Dichtungsfarbe erzielt werden. Im HSB-Farbmodell entspricht dies einem Abstand der Sättigung "S" (saturation). Ein weiterer vorteilhafter Wert für die Sättigung ist $\geq$ 80%.

Vorteilhaft ist es auch, wenn die genannte Türflügelfarbe und die genannte Dichtungsfarbe hinsichtlich ihrer Helligkeit einen Unterschied von wenigstens 50% aufweisen, wobei die Helligkeit insbesondere auf ein HSB-Farbmodell bezogen ist. Auf diese Weise kann ebenfalls ein ausreichender Kontrast zwischen der Türflügelfarbe und der Dichtungsfarbe erzielt werden. Im HSB-Farbmodell entspricht dies einem Abstand der Helligkeit "B" (brightness). Ein weiterer vorteilhafter Wert für die Helligkeit ist $\geq$ 80%.

Vorteilhaft ist es zudem, wenn der Kontrast nach diffusem Lichtreflexionsgrad zwischen der genannten Türflügelfarbe mit dem diffusen Lichtreflexionsgrad $L_T$ und der genannten Dichtungsfarbe mit dem diffusen Lichtreflexionsgrad $L_D$ zumindest K=0,3 beträgt, wobei der genannte Kontrast durch den Absolutwert der Formel

$$K = \frac{L_D - L_T}{L_D + L_T}$$

und $L_T$ beziehungsweise $L_D$ durch die Leuchtdichte des Streulichts definiert ist, das an einem Element der Oberfläche des Türflügels beziehungsweise der Türdichtung in eine beliebige Richtung reflektiert wird, dividiert durch die in die gleiche Richtung projizierte Fläche des Elements. Dies ist eine weitere Möglichkeit, den Kontrast zwischen der Türflügelfarbe und der Dichtungsfarbe basierend auf dem Helligkeitsunterschied zu definieren.

Besonders vorteilhaft ist es weiterhin, wenn die genannte Türflügelfarbe und die genannte Dichtungsfarbe

- bei einem Abstand im Farbkreis von < 22,5° einen Unterschied von Sättigung und/oder Helligkeit von wenigstens 60%,
- bei einem Abstand im Farbkreis von $\geq$ 22,5° bis < 45° einen Unterschied von Sättigung und/oder Helligkeit von wenigstens 50%
- bei einem Abstand im Farbkreis von $\geq$ 45° bis < 90° eine Sättigung und Helligkeit von wenigstens 70%,
- bei einem Abstand im Farbkreis von $\geq$ 90° bis < 135° eine Sättigung und Helligkeit von wenigstens 60% und
- bei einem Abstand im Farbkreis von $\geq$ 135° bis $\leq$ 180° eine Sättigung und Helligkeit von wenigstens 50% aufweisen.

Bei dieser Variante des Türmoduls wird ein Kontrast zwischen Türflügel und Türdichtung dadurch sichergestellt, dass die Sättigung / der Sättigungsunterschied und/oder die Helligkeit / der Helligkeitsunterschied der beiden Farben umso höher gewählt wird je kleine der Farbunterschied ist. Bei einem Blau und einem Türkis wird die Mindest-Sättigung und/oder die Mindest-Helligkeit also höher gewählt als zum Beispiel zwischen einem Blau und einem Grün.

Günstig ist es darüber hinaus, wenn die Färbung der Türdichtung einheitlich ist. Dadurch kann die Türdichtung technisch vergleichsweise einfach hergestellt werden.

Vorteilhaft ist es weiterhin, wenn die Türdichtung vollständig durchgefärbt ist. Dadurch ist die Türdichtung besonders widerstandsfähig. Selbst wenn Teile der Dichtung abgelöst werden oder ausbrechen, bleibt die Kennzeichnung der Tür vollständig erhalten. Denkbar ist aber natürlich auch, dass die Dichtung in Schichten aufgebaut ist und eine äußere Schicht gefärbt ist.

Besonders vorteilhaft ist auch, wenn die Türdichtung aus einem Silikonkautschuk oder Silikonelastomer besteht. Silikonkautschuke und Silikonelastomere sind in den gummielastischen Zustand überführbare Massen, welche mit geeigneten Pigmenten gefärbt werden können. Auf diese Weise kann eine gefärbte Türdichtung hergestellt werden, insbesondere eine vollständig durchgefärbte Türdichtung.

Günstig ist es zudem, wenn die Türdichtung entlang des gesamten Rands des Türflügels vorgesehen ist. Auf diese Weise wird die Tür einerseits besonders gut abgedichtet, ist andererseits aber auch besonders gut erkennbar.

Vorteilhaft ist es darüber hinaus, wenn die Türdichtung rot, gelb oder orange gefärbt ist. Diese Farben gelten als Warnfarben und werden somit besonders gut wahrgenommen.

Bei einem Schienenfahrzeug ist es schließlich von Vorteil, wenn die genannte Farbe der Türdichtung mit einer an diese angrenzenden Außenfarbe des Schienenfahrzeugs wenigstens auf einer Teillänge der Türdichtung kontrastiert, insbesondere auf einer Länge der Türdichtung von 30% der Gesamtlänge/Umfangslänge der Türdichtung. Bei dieser Variante kontrastiert die Türdichtung somit mit dem Türflügel und/oder dem (übrigen) Wagenkasten.

An dieser Stelle wird angemerkt, dass die zum Türmodul offenbarten Ausführungsvarianten und die sich daraus ergebenden Vorteile gleichermaßen auf das vorgestellte Schienenfahrzeug beziehen und umgekehrt.

Zum besseren Verständnis der Erfindung wird diese anhand der nachfolgenden Figuren näher erläutert. Es zeigen

Fig. 1    ein beispielhaftes und stark vereinfachtes Beispiel eines Schienenfahrzeugs;

Fig. 2    ein beispielhaftes und stark vereinfachtes Beispiel eines Türmoduls;

Fig. 3    ein erstes Beispiel einer Türdichtung im Horizontalschnitt;

Fig. 4    ein zweites Beispiel einer Türdichtung im Horizontalschnitt und

Fig. 5    ein drittes Beispiel einer Türdichtung im Horizontalschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

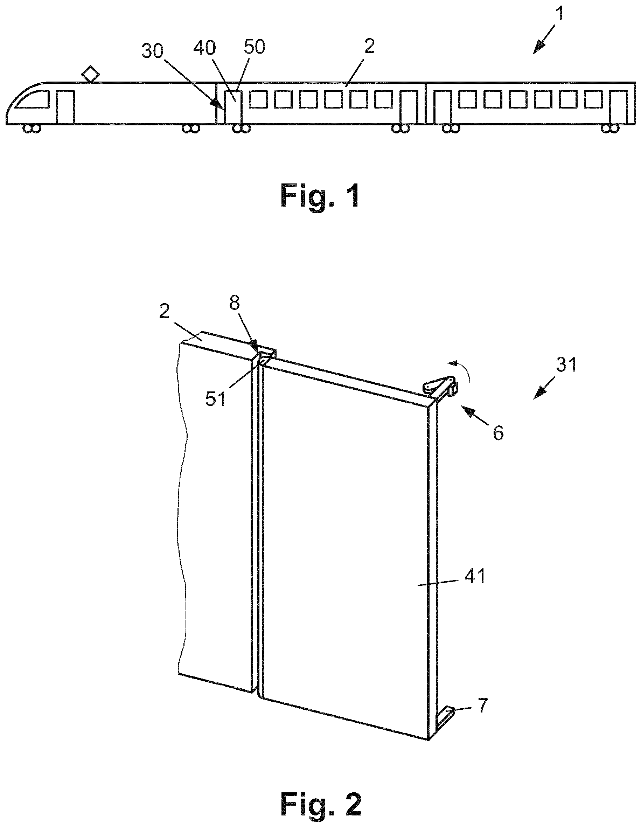

Fig. 1 zeigt ein Beispiel für ein Schienenfahrzeug 1 mit einer Lok und mehreren Wagen, wobei grundlegende Bauteile am Beispiel des ersten Wagens erläutert werden. Selbstverständlich sind diese aber auch am zweiten Wagen und sinngemäß an der Lok zu finden.

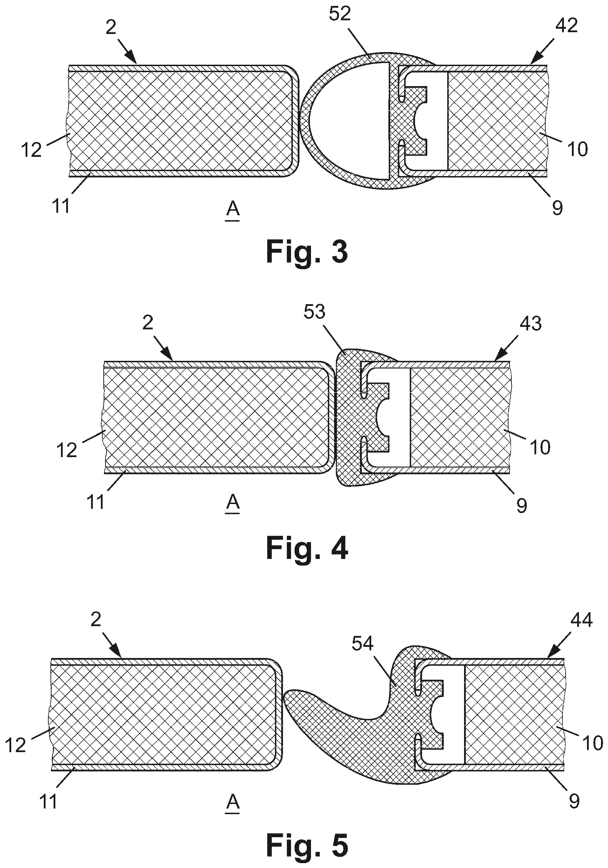

Der Wagen umfasst eine Außenwand 2 und mehrere Türmodule 30, welche jeweils einen Türflügel 40 und eine Türdichtung 50 umfassen, wobei die Türdichtung 50 am Rand des Türflügels 40 angeordnet ist und im geschlossenen Zustand des Türflügels 40 von der Außenseite wenigstens teilweise sichtbar ist (siehe dazu auch die Figuren 3 bis 5). Im gezeigten Beispiel ist die Türdichtung 50 entlang des gesamten Rands des Türflügels 40 vorgesehen. Dies ist aber nicht zwingend der Fall, wie auch die Fig. 2 zeigt.

Die Fig. 2 zeigt ein schematisch dargestelltes Beispiel eines Türmoduls 31 mit einem Türflügel 41 und einer einseitig angeordneten Türdichtung 51. Der Türflügel 41 ist mit den Hebeln 6 und 7 eines Schließmechanismus zwischen einer Offenstellung und einer Schließstellung bewegbar, wobei angenommen ist, dass der Türflügel 41 in den besagten Hebeln 6 und 7 verschiebbar gelagert ist, sodass dieser eine Ausstellbewegung und eine Verschiebebewegung ausführen kann. In der Fig. 2 ist schließlich auch dargestellt, dass die Türdichtung 51 in der Schließstellung in einen Falz 8 der Wand 2 gedrückt werden kann. Selbstverständlich ist ein Türmodul 31 nicht auf die gezeigte Dichtungsanordnungen limitiert, und es sind auch Abwandlungen derselben möglich. Beispielsweise kann die Türdichtung 51 auch an einer anderen Kante des Türflügels 41 angeordnet sein. Weiterhin können auch zwei, drei oder auch alle vier Kanten des Türflügels 41 mit Türdichtungen 51 ausgestattet sein. Desweiteren ist vorstellbar, dass die Ecken des Türflügels 41 gerundet sind und die Türdichtung 51 dort bogenförmig verläuft.

Fig. 3 zeigt nun einen Horizontalschnitt durch eine beispielhaft dargestellte Dichtung 52. Die Fig. 3 zeigt neben der Dichtung 52 auch einen Teil des Türflügel 42 und der Waggon-Wand 2. Der Türflügel 42 umfasst eine Beplankung 8, beispielsweise aus Blech, sowie eine Dämmschicht 10, beispielsweise aus extrudiertem Schaumstoff. Die Wand 2 ist ganz ähnlich aufgebaut und weist ebenfalls eine Beplankung 11 sowie eine Dämmschicht 12 auf. Die Türdichtung 52 weist einen Montagebereich auf, mit dem sie in der Beplankung 8 eingerastet wird. Weiterhin weist sie einen Hohlbereich auf, um eine einwandfreie Abdichtung zu gewährleisten. Wie aus der Fig. 3 gut erkennbar ist, ist die Türdichtung 52 auch ein Stück über die Kanten des Türflügels 42 gezogen und fungiert daher auch als Kantenschutz. Weiterhin ist der Fig. 3 zu entnehmen, dass die Türdichtung 52 im geschlossenen Zustand des Türflügels 42 von der Außenseite A teilweise sichtbar ist.

Die in den Figuren 4 und 5 dargestellten Anordnungen sind der in der Fig. 3 dargestellten Anordnung sehr ähnlich und zeigen ergänzend weitere beispielhafte Bauformen von Türdichtungen 53 und 54. Beide sind über die Kanten der Türflügel 43, 44 gezogen, und beide sind im geschlossenen Zustand der Türflügel 43, 44 von der Außenseite A teilweise sichtbar ist. Die Bauformen der Türflügel 42..44, der Wand 2 sowie der Türdichtungen 52..54 sind natürlich rein beispielhaft zu sehen, und es sind auch Abwandlungen derselben möglich.

Allen den in den Figuren 1 bis 5 dargestellten Anordnungen ist gemeinsam, dass die Türdichtung 50..54 zumindest im genannten Sichtbereich weiß oder bunt

- mit einer Farbsättigung von ≥ 0% bis < 20% und einer Helligkeit von ≥ 80%,
- mit einer Farbsättigung von ≥ 20% bis < 40% und einer Helligkeit von ≥ 60% oder
- mit einer Farbsättigung von ≥ 40% und einer Helligkeit von ≥ 40% gefärbt ist, wobei die Werte insbesondere auf ein HSB-Farbmodell bezogen sind.

Auf diese Weise dient die Türdichtung 50..54 neben ihrer Dichtfunktion auch dazu, um die Türe zu kennzeichnen. Dazu wird sie bunt oder im Wesentlichen weiß gefärbt. Insbesondere kann die Türdichtung 50..54 rot, gelb oder orange gefärbt sein, da diese als Warnfarben geltenden Farben von den Fahrgästen besonders gut wahrgenommen werden. Insbesondere gilt dies bei Bauformen, bei denen die Türdichtung 50..54 entlang des gesamten Rands des Türflügels 40..44 vorgesehen ist. Auf diese Weise ist die Tür besonders gut erkennbar.

Vorteilhaft kontrastiert die genannte Farbe der Türdichtung 50..54 mit einer an diese angrenzenden Außenfarbe des Türflügels 40..44 und/oder der Wand 2, das heißt die Türdichtung 50..54 hebt sich von der Außenfarbe des Türflügels 40..44 respektive der Wand 2 gut ab. Je besser der Kontrast ist, umso besser wird die Tür erkannt. Der Kontrast sollte vorteilhaft wenigstens auf einer Teillänge der Türdichtung 50..54 gegeben sin, insbesondere auf einer Länge der Türdichtung 50..54 von wenigstens 30% der Gesamtlänge/Umfangslänge der Türdichtung 50..54. Das heißt, dass die Farbe der Türdichtung 50..54 muss nicht unbedingt auf der ganzen Länge mit der Außenfarbe des Türflügels 40..44 respektive der Wand 2 kontrastieren.

Vorteilhaft ist die Färbung der Türdichtung 50..54 einheitlich, wodurch die Türdichtung 50..54 technisch vergleichsweise einfach hergestellt werden kann. Insbesondere bei mehrfarbigen Schienenfahrzeugen 1, beispielsweise gestreiften oder gemusterten Farbgestaltungen, weist die Farbe der Türdichtung 50..54 dann nicht auf der ganzen Länge denselben Kontrast mit der Außenfarbe des Türflügels 40..44 auf. Vorstellbar ist aber natürlich auch, dass die Türdichtung 50..54 mehrfarbig hergestellt ist und in den jeweiligen Bereichen jeweils in starkem Kontrast mit den zum Beispiel farbigen Streifen der Schienenfahrzeugs 1 steht.

Der geforderte Kontrast kann nun auf verschiedene Weise realisiert werden. Beispielsweise kann die genannte Türflügelfarbe und die genannte Dichtungsfarbe in einem Farbkreis, insbesondere in einem Farbkreis des HSB-Farbmodells oder dem Farbkreis nach Itten, mindestens 45° Abstand aufweisen. Im HSB-Farbmodell entspricht dies einem Abstand des Farbwerts "H" (hue). Weitere vorteilhafte Werte sind 90° und 135° sowie 180°. Beispielsweise kann der Türflügel 40..44 respektive die Wand 2 blau gefärbt sein, wohingegen die Türdichtung 50..54 türkis oder lila (45° Abstand), rosa oder blaugrün (90° Abstand), rot oder grün (135° Abstand) oder gar gelb (180° Abstand) gefärbt sein kann.

Der geforderte Kontrast kann auch dadurch bewerkstelligt werden, dass die genannte Türflügelfarbe und die genannte Dichtungsfarbe hinsichtlich ihrer Sättigung einen Unterschied von wenigstens 50% aufweisen, wobei die Sättigung insbesondere auf ein HSB-Farbmodell bezogen ist. Im HSB-Farbmodell entspricht dies einem Abstand der Sättigung "S" (saturation). Beispielsweise kann der Türflügel 40..44 respektive die Wand 2 in pastellfarbigem, blassem Rot gefärbt sein, wohingegen die Türdichtung 50..54 hellrot bzw. neonrot gefärbt ist. Stark gesättigte Farben respektive Neonfarben eignen sich generell gut als Farbe für die Türdichtung 50..54, da diese von den Fahrgästen gut wahrgenommen werden und vergleichsweise stark mit den oft blasseren Farben des (restlichen) Schienenfahrzeugs 1 kontrastieren.

Der geforderte Kontrast kann zudem dadurch realisiert werden, dass die genannte Türflügelfarbe und die genannte Dichtungsfarbe hinsichtlich ihrer Helligkeit einen Unterschied von wenigstens 50% aufweisen, wobei die Helligkeit insbesondere auf ein HSB-Farbmodell bezogen ist. Im HSB-Farbmodell entspricht dies einem Abstand der Helligkeit "B" (brightness). Beispielsweise kann der Türflügel 40..44 respektive die Wand 2 in dumpfem Grün gefärbt sein, wohingegen die Türdichtung 50..54 hellgrün gefärbt ist. Sehr helle Farben eignen sich generell gut als Farbe für die Türdichtung 50..54, da diese von den Fahrgästen gut wahrgenommen werden und vergleichsweise stark mit den zumeist dumpferen Farben des (restlichen) Schienenfahrzeugs 1 kontrastieren.

Für den Kontrast zwischen der Türflügelfarbe und der Dichtungsfarbe basierend auf dem Helligkeitsunterschied kann auch der Kontrast nach diffusem Lichtreflexionsgrad herangezogen werden, welcher durch den Absolutwert der Formel

$$K = \frac{L_D - L_T}{L_D + L_T}$$

definiert ist. Dabei bezeichnet $L_D$ den diffusen Lichtreflexionsgrad der Dichtungsfarbe und $L_T$ den diffusen Lichtreflexionsgrad der Türflügelfarbe. $L_T$ beziehungsweise $L_D$ sind durch die Leuchtdichte des Streulichts definiert, das an einem Element der Oberfläche des Türflügels 40..44 beziehungsweise der Türdichtung 50..54 in eine beliebige Richtung reflektiert wird, dividiert durch die in die gleiche Richtung projizierte Fläche des Elements. Für eine gute Erkennung der Tür einen Schienenfahrzeugs 1 sollte der diffuse Lichtreflexionsgrad zumindest K=0,3 betragen.

Die obigen Varianten können auch kombiniert werden. Vorzugsweise sollte die genannte Türflügelfarbe und die genannte Dichtungsfarbe

- bei einem Abstand im Farbkreis von < 22,5° einen Unterschied von Sättigung und/oder Helligkeit von wenigstens 60%,
- bei einem Abstand im Farbkreis von ≥ 22,5° bis < 45° einen Unterschied von Sättigung und/oder Helligkeit von wenigstens 50%,
- bei einem Abstand im Farbkreis von ≥ 45° bis < 90° eine Sättigung und Helligkeit von wenigstens 70%,
- bei einem Abstand im Farbkreis von ≥ 90° bis < 135° eine Sättigung und Helligkeit von wenigstens 60% und
- bei einem Abstand im Farbkreis von ≥ 135° bis ≤ 180° eine Sättigung und Helligkeit von wenigstens 50% aufweisen.

Bei dieser Variante des Türmoduls 30, 31 wird ein Kontrast zwischen Türflügel 40..44 und Türdichtung 50..54 dadurch sichergestellt, dass die Sättigung / der Sättigungsunterschied und/oder die Helligkeit / der Helligkeitsunterschied der beiden Farben umso höher gewählt wird je kleine der Farbunterschied ist. Beispielsweise reicht für einen Blauton und einen Gelbton eine Sättigung und eine Helligkeit von 50% aus, um diese unzweifelhaft als unterschiedliche Farben wahrzunehmen. Ist der Türflügel 40..44 respektive die Wand 2 rot und Türdichtung 50..54 helloarnge gefärbt (ca. 60° Abstand im Farbkreis), so sollten die beiden Farben dagegen eine Sättigung und/oder Helligkeit von wenigstens 70% aufweisen. Unterhalb einem Farbabstand von 45° sollten sich die Farben hinsichtlich ihrer Sättigung und/oder Helligkeit voneinander unterscheiden, um als unterschiedliche Farben wahrgenommen zu werden.

Eine Sonderstellung nehmen die im Schienenfahrzeugbau ebenfalls gebräuchlichen Farben Weiß und Schwarz ein, die zu den unbunten Farben zählen. Da eine Unterscheidung im Farbkreis nicht möglich ist, kann ein Kontrast zu Weiß oder Schwarz nur über die Wahl einer bunten Farbe mit einer entsprechenden Sättigung und/oder Helligkeit realisiert werden. Ist der Türflügel 40..44 respektive die Wand 2 weiß gefärbt (0% Sättigung, 100% Helligkeit), so kann die Türdichtung 50..54 in beliebiger Farbe mit ausreichender Sättigung und/oder Helligkeit gefärbt sein. Vorzugsweise sollte die Sättigung einen Unterschied von wenigstens 30% und/oder die Helligkeit einen Unterschied von wenigstens 30% aufweisen. Beispielsweise kann für die Türdichtung 50..54 ein Rot mit 30% Sättigung und 50% Helligkeit vorgesehen sein. Analoge Überlegungen gelten für die Farbe Schwarz.

Bei feinen Mustern kann zudem vorgesehen sein, dass der Kontrast über eine bestimmte Fläche gemittelt wird. Beispielsweise wird die Farbe des Türflügel 40..44, oder der Wand 2 über eine Fläche von 1 dm² gemittelt, die der Türdichtung 50..54 über eine Fläche von 0,1 dm² des von außen sichtbaren Teils. Insbesondere werden dazu quadratische Messflächen herangezogen.

Generell ist es von Vorteil, wenn die Türdichtung 50..54 vollständig durchgefärbt ist. Dadurch ist die Türdichtung 50..54 besonders widerstandsfähig. Selbst wenn Teile der Türdichtung 50..54 abgelöst werden oder ausbrechen, bleibt die Kennzeichnung der Tür vollständig erhalten. Denkbar wäre natürlich auch der Einsatz partiell, insbesondere oberflächlich, gefärbter Türdichtung 50..54.

Insbesondere ist es auch von Vorteil, wenn die Türdichtung 50..54 aus einem Silikonkautschuk oder Silikonelastomer besteht. Silikonkautschuke und Silikonelastomere sind in den gummielastischen Zustand überführbare Massen, welche mit geeigneten Pigmenten gefärbt werden können. Auf diese Weise kann eine gefärbte Türdichtung 50..54 hergestellt werden, insbesondere eine vollständig durchgefärbte Türdichtung 50..54.

Die Ausführungsbeispiele zeigen mögliche Ausführungsvarianten eines erfindungsgemäßen Schienenfahrzeugs 1 respektive Türmoduls 30, 31, wobei an dieser Stelle bemerkt sei, dass die Erfindung nicht auf die speziell dargestellten Ausführungsvarianten desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Insbesondere wird festgehalten, dass ein Schienenfahrzeugs 1 respektive Türmoduls 30, 31 in der Realität auch mehr oder weniger Bestandteile als dargestellt umfassen kann.

Der Ordnung halber sei abschließend darauf hingewiesen, dass zum besseren Verständnis des Aufbaus des Schienenfahrzeugs 1 respektive Türmoduls 30, 31 dieses beziehungsweise dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

**Bezugszeichenaufstellung**

| | |
|---|---|
| 1 | Schienenfahrzeug |
| 2 | Außenwand des Schienenfahrzeugs |
| 30..31 | Türmodul |
| 40..44 | Türflügel |
| 50..54 | Türdichtung |
| 6 | Ausstellhebel |
| 7 | Ausstellhebel |
| 8 | Falz |
| 9 | Beplankung Türflügel |
| 10 | Dämmschicht Türflügel |
| 11 | Beplankung Außenwand |
| 12 | Dämmschicht Außenwand |
| A | Außenseite |

**Patentansprüche**

1. Schienenfahrzeugtürmodul (30, 31) für ein Schienenfahrzeug (1), umfassend einen Türflügel (40..44) und eine Türdichtung (50..54), wobei die Türdichtung (50..54) am Rand des Türflügels (40..44) angeordnet ist und im geschlossenen Zustand des Türflügels (40..44) von der Außenseite (A) wenigstens teilweise sichtbar ist,
**dadurch gekennzeichnet, dass**
die Türdichtung (50..54) zumindest im genannten Sichtbereich weiß oder bunt

a1) mit einer Farbsättigung von $\geq 0\%$ bis $< 20\%$ und einer Helligkeit von $\geq 80\%$,
a2) mit einer Farbsättigung von $\geq 20\%$ bis $< 40\%$ und einer Helligkeit von $\geq 60\%$ oder
a3) mit einer Farbsättigung von $\geq 40\%$ und einer Helligkeit von $\geq 40\%$ gefärbt ist, wobei die Werte insbesondere auf ein HSB-Farbmodell bezogen sind und
b) die genannte Farbe der Türdichtung (50..54) mit einer an diese angrenzenden Außenfarbe des Türflügels (40..44) wenigstens auf einer Teillänge der Türdichtung (50..54) kontrastiert, insbesondere auf einer Länge der Türdichtung (50..54) von wenigstens 30% der Gesamtlänge/Umfangslänge der Türdichtung (50..54).

2. Schienenfahrzeugtürmodul (30, 31) nach Anspruch 1, **dadurch gekennzeichnet, dass** die genannte Türflügelfarbe und die genannte Dichtungsfarbe in einem Farbkreis, insbesondere in einem Farbkreis des HSB-Farbmodells oder dem Farbkreis nach Itten, mindestens 45° Abstand aufweisen.

3. Schienenfahrzeugtürmodul (30, 31) nach Anspruch 1 oder 2, **dadurch gekennzeichnet, dass** die genannte Türflügelfarbe und die genannte Dichtungsfarbe hinsichtlich ihrer Sättigung einen Unterschied von wenigstens 50% aufweisen, wobei die Sättigung insbesondere auf ein HSB-Farbmodell bezogen ist.

4. Schienenfahrzeugtürmodul (30, 31) nach einem der Ansprüche 1 bis 3, **dadurch gekennzeichnet, dass** die genannte Türflügelfarbe und die genannte Dichtungsfarbe hinsichtlich ihrer Helligkeit einen Unterschied von wenigstens 50% aufweisen, wobei die Helligkeit insbesondere auf ein HSB-Farbmodell bezogen ist.

5. Schienenfahrzeugtürmodul (30, 31) nach einem der Ansprüche 1 bis 3, **dadurch gekennzeichnet, dass** der Kontrast nach diffusem Lichtreflexionsgrad zwischen der genannten Türflügelfarbe mit dem diffusen Lichtreflexionsgrad $L_T$ und der genannten Dichtungsfarbe mit dem diffusen Lichtreflexionsgrad $L_D$ zumindest K=0,3 beträgt, wobei der genannte Kontrast durch den Absolutwert der Formel

$$K = \frac{L_D - L_T}{L_D + L_T}$$

und $L_T$ beziehungsweise $L_D$ durch die Leuchtdichte des Streulichts definiert ist, das an einem Element der Oberfläche des Türflügels (40..44) beziehungsweise der Türdichtung (50..54) in eine beliebige Richtung reflektiert wird, dividiert durch die in die gleiche Richtung projizierte Fläche des Elements.

6. Schienenfahrzeugtürmodul (30, 31) nach einem der Ansprüche 1 oder 5, **dadurch gekennzeichnet, dass** die genannte Türflügelfarbe und die genannte Dichtungsfarbe

- bei einem Abstand im Farbkreis von $< 22,5°$ einen Unterschied von Sättigung und/oder Helligkeit von wenigstens 60%,
- bei einem Abstand im Farbkreis von $\geq 22,5°$ bis $< 45°$ einen Unterschied von Sättigung und/oder Helligkeit von wenigstens 50%
- bei einem Abstand im Farbkreis von $\geq 45°$ bis $< 90°$ eine Sättigung und Helligkeit von wenigstens 70%,
- bei einem Abstand im Farbkreis von $\geq 90°$ bis $< 135°$ eine Sättigung und Helligkeit von wenigstens 60% und
- bei einem Abstand im Farbkreis von $\geq 135°$ bis $\leq 180°$ eine Sättigung und Helligkeit von wenigstens 50% aufweisen.

7. Schienenfahrzeugtürmodul (30, 31) nach einem der Ansprüche 1 bis 6, **dadurch gekennzeichnet, dass** die Färbung der Türdichtung (50..54) einheitlich ist.

**8.** Schienenfahrzeugtürmodul (30, 31) nach einem der Ansprüche 1 bis 7, **dadurch gekennzeichnet, dass** die Türdichtung (50..54) vollständig durchgefärbt ist.

**9.** Schienenfahrzeugtürmodul (30, 31) nach einem der Ansprüche 1 bis 8, **dadurch gekennzeichnet, dass** die Türdichtung (50..54) aus einem Silikonkautschuk oder Silikonelastomer besteht.

**10.** Schienenfahrzeugtürmodul (30, 31) nach einem der Ansprüche 1 bis 9, **dadurch gekennzeichnet, dass** die Türdichtung (50..54) entlang des gesamten Rands des Türflügels (40..44) vorgesehen ist.

**11.** Schienenfahrzeugtürmodul (30, 31) nach einem der Ansprüche 1 bis 10, **dadurch gekennzeichnet, dass** die Türdichtung (50..54) rot, gelb oder orange gefärbt ist.

**12.** Schienenfahrzeug (1), umfassend ein Schienenfahrzeugtürmodul (30, 31) nach einem der Ansprüche 1 bis 11, **dadurch gekennzeichnet, dass** die genannte Farbe der Türdichtung (50..54) alternativ oder zusätzlich zu einer Kontrastierung mit einer an die Türdichtung (50..54) angrenzenden Außenfarbe des Türflügels (40..44) mit einer an die Türdichtung (50..54) angrenzenden Außenfarbe des Schienenfahrzeugs (1) wenigstens auf einer Teillänge der Türdichtung (50..54) kontrastiert, insbesondere auf einer Länge der Türdichtung (50..54) von 30% der Gesamtlänge/Umfangslänge der Türdichtung (50..54).

**Claims**

**1.** A rail vehicle door module (30, 31) for a rail vehicle (1), comprising a door leaf (40..44) and a door seal (50..54), the door seal (50..54) being arranged on the edge of the door leaf (40..44) and being at least partially visible from the outside (A) when the door leaf (40..44) is in the closed state, **characterised in that** the door seal (50..54) is, at least in the said visible region, dyed white or coloured

> a1) with a colour saturation of $\geq$ 0 % to < 20 % and a brightness of $\geq$ 80 %,
> a2) with a colour saturation of $\geq$ 20 % to < 40 % and a brightness of $\geq$ 60 %, or
> a3) with a colour saturation of $\geq$ 40 % and a brightness of $\geq$ 40 %, wherein the values relate in particular to an HSB colour model, and
> b) the said colour of the door seal (50..54) contrasts with an outer colour, adjacent thereto, of the door leaf (40..44), at least over some of the length of the door seal (50..54), in particular over a length of the door seal (50..54) of at least 30 % of the total length / perimeter length of the door seal (50..54).

**2.** The rail vehicle door module (30, 31) according to claim 1, **characterised in that** the said door leaf colour and the said seal colour have an at least 45° spacing in a colour wheel, in particular in a colour wheel of the HSB colour model or Itten's colour wheel.

**3.** The rail vehicle door module (30, 31) according to claim 1 or 2, **characterised in that** the said door leaf colour and the said seal colour have a difference in saturation of at least 50 %, wherein the saturation relates in particular to an HSB colour model.

**4.** The rail vehicle door module (30, 31) according to any one of claims 1 to 3, **characterised in that** the said door leaf colour and the said seal colour have a difference in brightness of at least 50 %, wherein the brightness relates in particular to an HSB colour model.

**5.** The rail vehicle door module (30, 31) according to any one of claims 1 to 3, **characterised in that** the contrast in diffuse reflectance between the said door leaf colour with the diffuse reflectance $L_T$ and the said seal colour with the diffuse reflectance $L_D$ is at least K = 0.3, wherein the said contrast is defined by the absolute value of the formula

$$K = \frac{L_D - L_T}{L_D + L_T}$$

and $L_T$ and $L_D$ are defined by the light density of the scattered light that is reflected in any direction at an element of the surface of the door leaf (40..44) and door seal (50..54), respectively, divided by the area of the element projected in the same direction.

**6.** The rail vehicle door module (30, 31) according to either of claims 1 or 5, **characterised in that** the said door leaf colour and the said seal colour

> - have a difference in saturation and/or brightness of at least 60 % with a spacing in the colour wheel of < 22.5°,
> - have a difference in saturation and/or brightness of at least 50 % with a spacing in the colour wheel of $\geq$ 22.5° to < 45°,
> - have a saturation and/or brightness of at least 70 % with a spacing in the colour wheel of $\geq$ 45° to < 90°,
> - have a saturation and brightness of at least 60 % with a spacing in the colour wheel of $\geq$ 90° to < 135°, and
> - have a saturation and brightness of at least 50 % with a spacing in the colour wheel of $\geq 135°$ to $\leq 180°$.

7. The rail vehicle door module (30, 31) according to any one of claims 1 to 6, **characterised in that** the colour of the door seal (50..54) is uniform.

8. The rail vehicle door module (30, 31) according to any one of claims 1 to 7, **characterised in that** the door seal (50..54) is dyed all the way through.

9. The rail vehicle door module (30, 31) according to any one of claims 1 to 8, **characterised in that** the door seal (50..54) consists of a silicone rubber or silicone elastomer.

10. The rail vehicle door module (30, 31) according to any one of claims 1 to 9, **characterised in that** the door seal (50..54) is provided along the entire edge of the door leaf (40..44).

11. The rail vehicle door module (30, 31) according to any one of claims 1 to 10, **characterised in that** the door seal (50..54) is dyed red, yellow or orange.

12. A rail vehicle (1), comprising a rail vehicle door module (30, 31) according to any one of claims 1 to 11, **characterised in that** the said colour of the door seal (50..54), alternatively or additionally to a contrast with an outer colour, adjacent to the door seal (50..54), of the door leaf (40..44), contrasts with an outer colour, adjacent to the door seal (50..54), of the rail vehicle (1), at least over some of the length of the door seal (50..54), in particular over a length of the door seal (50..54) of 30 % of the total length / perimeter length of the door seal (50..54).

**Revendications**

1. Module de porte de véhicule ferroviaire (30, 31) pour un véhicule ferroviaire (1), comprenant battant de porte (40 ... 44) et un joint d'étanchéité (50 ... 54), le joint d'étanchéité (50 ... 54) étant disposé sur le bord du battant de porte (40 ... 44) et étant visible au moins partiellement de l'extérieur (A) dans l'état fermé du battant de porte (40 ... 44),
**caractérisé en ce que**
le joint d'étanchéité de porte (50 ... 54) étant coloré, au moins dans la zone visible mentionnée, de blanc ou de couleurs,

a1) avec une saturation de couleurs $\geq 0$ % à < 20 % et une luminosité $\geq 80$ %,
a2) avec une saturation de couleurs $\geq 20$ % à < 40 % et une luminosité $\geq 60$ % ou
a3) avec une saturation de couleurs $\geq 40$ % et une luminosité $\geq 40$ %, les valeurs étant plus particulièrement basées sur un modèle colorimétrique HSB et
b) la couleur mentionnée du joint d'étanchéité de porte (50 ... 54) contrastant avec une couleur extérieure, adjacente à celle-ci, du battant de porte (40 ... 44) au moins une sur longueur partielle du joint d'étanchéité de porte (50 ... 54), plus particulièrement sur une longueur du joint d'étanchéité de porte (50 ... 54) d'au moins 30 % de la longueur totale/ circonférence du joint d'étanchéité de porte (50 ... 54).

2. Module de porte de véhicule ferroviaire (30, 31) selon la revendication 1, **caractérisé en ce que** la couleur mentionnée du battant de porte et la couleur mentionnée du joint d'étanchéité présentant, dans un cercle chromatique, plus particulièrement dans un cercle chromatique du modèle colorimétrique HSB ou dans le cercle chromatique selon Itten, une distance d'au moins 45°.

3. Module de porte de véhicule ferroviaire (30, 31) selon la revendication 1 ou 2, **caractérisé en ce que** la couleur mentionnée du battant de porte et la couleur mentionnée du joint d'étanchéité présentant, en ce qui concerne leur saturation, une différence d'au moins 50 %, la saturation étant basée plus particulièrement sur un modèle chromatique HSB.

4. Module de porte de véhicule ferroviaire (30, 31) selon l'une des revendications 1 à 3, **caractérisé en ce que** la couleur mentionnée du battant de porte et la couleur mentionnée du joint d'étanchéité présentant, en ce qui concerne leur luminosité, une différence d'au moins 50 %, la luminosité étant basée plus particulièrement sur un modèle chromatique HSB.

5. Module de porte de véhicule ferroviaire (30, 31) selon l'une des revendications 1 à 3, **caractérisé en ce que** le contraste selon le degré de réflexion de lumière diffuse entre la couleur mentionnée du battant de porte avec le degré de réflexion de lumière diffuse $L_T$ et la couleur mentionnée du joint d'étanchéité avec le degré de réflexion de lumière diffuse $L_D$ est d'au moins K = 0,3, le contraste mentionné étant défini par la valeur absolue de la formule :

$$K = \frac{L_D - L_T}{L_D + L_T}$$

et $L_T$ ou $L_D$ étant définie par la luminance de la lumière diffusée, qui est réfléchie au niveau d'un élément de la surface du battant de porte (40 ... 44) ou du joint d'étanchéité de porte (50 ... 54) dans une direction quelconque, divisé par la surface, projeté dans la même direction, de l'élément.

**6.** Module de porte de véhicule ferroviaire (30, 31) selon l'une des revendications 1 ou 5, **caractérisé en ce que** la couleur mentionnée du battant de porte et la couleur mentionnée du joint d'étanchéité

- présentent, dans le cas d'une distance dans le cercle chromatique < 22,5°, une différence de saturation et/ou de luminosité d'au moins 60 %,
- présentent, dans le cas d'une distance dans le cercle chromatique ≥ 22,5° à < 45°, une différence de saturation et/ou de luminosité d'au moins 50 %,
- présentent, dans le cas d'une distance dans le cercle chromatique ≥ 45 % à < 90°, une saturation et une luminosité d'au moins 70 %
- présentent, dans le cas d'une distance dans le cercle chromatique ≥ 90 % à < 135°, une saturation et une luminosité d'au moins 60 % et
- présentent, dans le cas d'une distance dans le cercle chromatique ≥ 135° à ≤ 180°, une saturation et une luminosité d'au moins 50 %.

**7.** Module de porte de véhicule ferroviaire (30, 31) selon l'une des revendications 1 à 6, **caractérisé en ce que** la coloration du joint d'étanchéité (50 ... 54) est unie.

**8.** Module de porte de véhicule ferroviaire (30, 31) selon l'une des revendications 1 à 7, **caractérisé en ce que** le joint d'étanchéité de porte (50 ... 54) est entièrement coloré.

**9.** Module de porte de véhicule ferroviaire (30, 31) selon l'une des revendications 1 à 8, **caractérisé en ce que** le joint d'étanchéité de porte (50 ... 54) est constitué d'un caoutchouc au silicone ou d'un élastomère au silicone.

**10.** Module de porte de véhicule ferroviaire (30, 31) selon l'une des revendications 1 à 9, **caractérisé en ce que** le joint d'étanchéité de porte (50 ... 54) est prévue le long de tout le bord du battant de porte (40 ... 44).

**11.** Module de porte de véhicule ferroviaire (30, 31) selon l'une des revendications 1 à 10, **caractérisé en ce que** le joint d'étanchéité de porte (50 ... 54) est est de couleur rouge, jaune ou orange.

**12.** Véhicule ferroviaire (1) comprenant un module de porte de véhicule ferroviaire (30, 31) selon l'une des revendications 1 à 11, **caractérisé en ce que** la couleur mentionnée du joint d'étanchéité (50 ... 54) contraste de manière alternative ou en plus d'un contraste avec une couleur extérieure du battant de porte (40 ... 44) adjacente au joint d'étanchéité de porte (50 ... 54), avec une couleur extérieure du véhicule ferroviaire (1) adjacente au joint d'étanchéité de porte (50 ... 54), au moins sur une longueur partielle du joint d'étanchéité de porte (50 ... 54), plus particulièrement sur une longueur du joint d'étanchéité de porte (50 ... 54) de 30 % de la longueur totale/circonférence du joint d'étanchéité de porte (50 ... 54).

# Fig. 1

# Fig. 2

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1014924 A